# EUROPEAN PATENT SPECIFICATION

(11) **EP 0 435 426 B1**
(45) Date of publication and mention of the grant of the patent: **30.06.1993**
(21) Application number: 90309893.7
(22) Date of filing: 10.09.1990
(51) Int. Cl.: B01J 2/00, B01J 13/04, B01J 13/24

(54) **Method of coating surfaces of a powdered material, and apparatus therefor**
Verfahren und Vorrichtung zum Überziehen von Pulver
Procédé et dispositif pour enrober une poudre

(30) Priority: 28.12.1989 JP 342347/89
(43) Date of publication of application: 03.07.1991
(73) Proprietor: FUKUVI CHEMICAL INDUSTRY CO., LTD., Fukui-shi Fukui (JP); Horii, Kiyoshi, Tokyo (JP)
(72) Inventor: Horii, Kiyoshi, Tokyo (JP); Sawasaki, Hiroaki c/o Fukuvi Chemical Ind. Co., Fukui (JP)
(74) Representative: Leale, Robin George

(56) References cited:
- US-A- 3 940 514
- US-A- 3 961 106

## Description

The present invention relates generally to a method of coating surfaces of a powdered material, and apparatus therefor. More specifically, it relates to a method of coating surfaces of a powdered material evenly and at high efficiency, and apparatus therefor.

Conventionally, surface coating of a powdered material has been performed in various fields, and has been carried out by various means whereby functional coating layers or protective layers are formed on the surfaces of a particle, a pellet or a fine fiber.

For instance, a method of coating surfaces of a powdered material by means of a mixer having agitating blades, or for coating them by bursting a powdered material and a coating material using a jet flow, have been conventionally known.

However, in the conventional methods, it was very difficult to apply desired coatings to the surfaces of a powdered material in a micron or submicron order. In particular it was difficult to apply a desired coating on the surfaces of an individual particle without any aggregation of a fine powdered material, and damage. This is attributable to the tendency of a fine powdered material to form an aggregate mass due to secondary coagulation, and to become broken due to mechanical forced mixing.

Furthermore, in the conventional methods, since a powdered material and a coating material tend to adhere to the wall of a device during the surface coating, there was a limitation to the improvement of productivity of a coating powdered material.

According to one aspect of the present there is provided a method of coating surfaces of a powdered material, in which surfaces of a powdered material are coated by blowing a liquid coating material atomized by diffused gas through a coanda slit of a coanda spiral flow generating portion into the powdered material, which material is conveyed by a coanda flow or a coanda spiral flow.

According to another aspect of the invention there is provided apparatus for coating surfaces of a powdered material, which comprises a powdered material introducing portion in which the powdered material is caused to undergo a coanda flow or a coanda spiral flow, and a coanda spiral flow generating portion for introducing a liquid coating material atomized by diffused gas.

Some embodiments of the invention will now be described by way of example and with reference to the accompanying drawings, in which:-
Fig. 1 is a cross sectional view of a first embodiment of a device of the present invention;
Fig. 2 is a cross sectional view of another embodiment of a device of the present invention; and
Fig. 3 is a cross sectional view of a further embodiment of a device of the present invention.

In the present invention, there are no specific limitations on the kind and shape of a powdered material to which a coating can be applied. Metals, inorganic substances, polymers or other materials, in particle, pellet, short fiber or underfined shape, may all be coated. As to size, a fine powdered material in micron and submicron order can be coated. The invention is particularly useful in the surface coating of a fine short fiber powdered material.

As for coating materials, anything that can be used as a liquid coating material can be employed. By both physical coating and reactive coating processes, surfaces of a powdered material can be coated. An appropriate coating process can be adopted depending on the purposes, for example reforming, or protection of the surfaces of a powdered material, or provision of new functions.

The present invention has been established as a process technology by using the above-mentioned powdered materials and coating materials and making use of fluid phenomena with coanda flow and, further, with coanda spiral flow, that have been investigated by the inventors of the present invention.

A coanda flow is characterized by a vast difference in velocity and density between the axial flow of a fluid and the flow around the axial one, and by the formation of a dynamic boundary region near a conduit wall. A coanda spiral flow developed from this coanda flow is formed as a specific spiral flow in which axial vector and radial vector are synthesized.

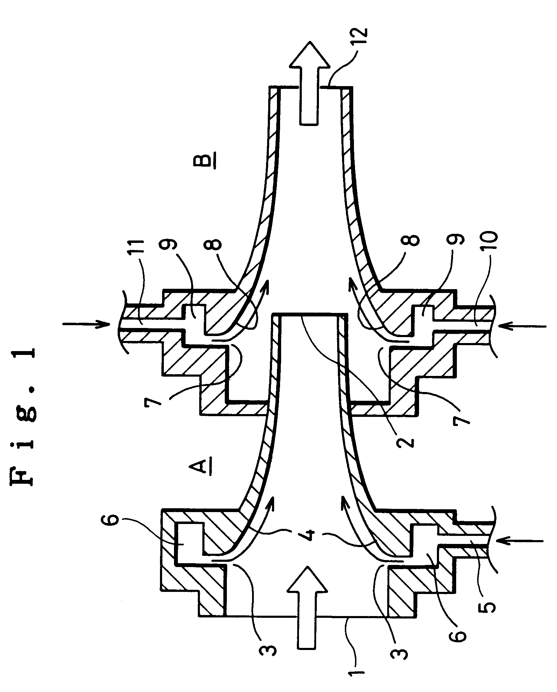

Referring now to the drawings, Fig. 1 shows a device for coating surfaces of a powdered material, comprising a composite structure in which a unit A and a unit B are linked. These units A and B are either integral or separate in construction. In either case, they can be regarded as being connected in terms of function.

The unit A constitutes an inlet portion for a powdered material to undergo coanda spiral flow. The unit comprises a supply port 1, a discharge port 2, an annular coanda slit 3 for the introduction of pressurized gas in the lateral direction, a curved inclined surface 4 in the vicinity of said coanda slit 3, a supply pipe for pressurized gase 5, and a distribution portion 6.

A powdered material to be coated is introduced through the supply port 1 and conveyed to the unit B by pressurized gas introduced through the coanda slit 3. The pressurized gas forms a coanda flow along the curved inclined surface 4, and in this example, a spiral motion is generated in the flow of powdered material.

The unit B has an annular coanda slit 7 through which a liquid coating material atomized by pressurized diffused gas is blown, a curved inclined surface 8, and a distribution portion 9, and is provided with a pressurized gas supply pipe 10 and a liquid supply pipe 11 to generate and supply a mist of a liquid coating material.

In the unit B, a mist of liquid coating material formed by a mixture of pressurized gas and the liquid coating material is blown from the coanda slit 7 into the conduit for the powdered material, the surfaces of the powdered material are coated with the coating material, and the coated powdered material is discharged from the discharge outlet 12.

As the pressurized gas to be blown from the coanda slits 3 and 7 of the units A and B, any of air, inert gas and reactive gas can be employed, and can be selected depending on the kinds and physical properties of the powdered material and the coating material, the characteristics of the coating to be processed, and the use of a physical or a reactive coating.

The pressure of the pressurized gas can be in the range between 1 and 10kg/cm² or greater, and can be freely set depending on the amount of the powdered material to be introduced, flow velocity, or the amount and velocity of an atomized coating material to be blown.

The solid/gas ratio can also be selected from among wide ranges.

The inclined angle of the curved inclined surfaces 4 and 8 of the units A and B is widely variable, and can be set to the value which permits a coanda flow, or in particular a coanda spiral flow in this example, to be generated and to be maintained unbroken, namely 20° to 70°.

In a device and a method for coating surfaces of a powdered material according to the present invention, the use of a unit having the features of unit A is of importance to control the secondary coagulation of a powdered material, promote diffusion, and generate an orientation particularly important to a short fiber. The importance of unit B, on the other hand, is to diffuse and bring a coating material into contact with the well-diffused powdered material and to permit even and highly efficient coating. In addition, the unit B is important because it has a drying function.

To improve coating efficiency, as well as to provide the desired physical property and convey the coated powdered material, the length of the curved inclined surface 8 extending from the coanda slit 7 to the discharge outlet 12 of the unit B can be extended to a suitable amount. The discharge outlet 12 can be connected to a conduit for transporting the coated material.

A liquid coating material may be mixed and generated in the distribution portion 9 or alternatively a pre-mixed gas/liquid mixture may be allowed to blow out of the coanda slit 7.

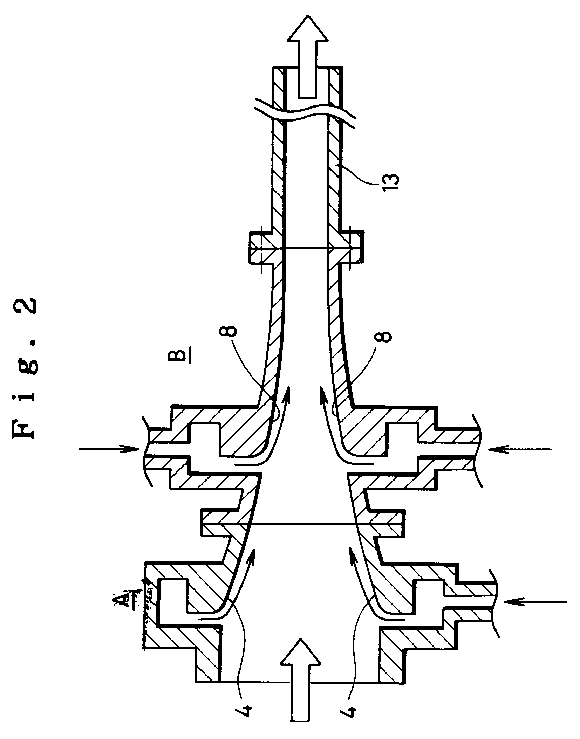

In the embodiment shown in Fig. 2, the construction of linked units A and B is different from that in Fig. 1. Thus, the curved inclined surface 4 of unit A is connected to the curved inclined surface 8 of the unit B. In this embodiment the discharge outlet 12 is shown as being connected to a conduit 13 for transporting the coated material.

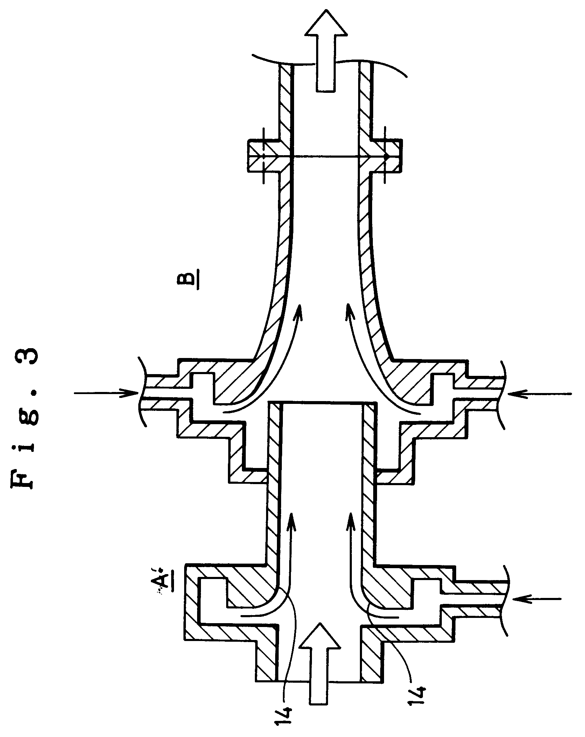

In the embodiment shown in Fig. 3, a coanda flow unit having no curved inclined surface 4 as in the embodiments of Figs. 1 amd 2, but rather having a curved surface 14, is provided in the unit A. As a result, a coanda flow is generated in unit A, but a spiral motion does not occur. However, in the unit B coupled to the unit A, a spiral motion occurs. Thus, in a device as shown in Fig.3, for example, a normal coanda flow unit and a coanda spiral flow unit can be suitably combined as units A and B.
Some examples of the use of the present invention are described as follows.

### EXAMPLE 1

A surface coating was applied using a device as shown in Fig. 1. The lengths of the units A and B were set at approximatly 10 cm, the bore of the discharge outlet 12 of the unit B at 16 mm, and the tapered angle of the curved inclined surfaces 4 and 8 of the units A and B at 45°.

A potassium titanate (K₂O.6TiO₂) fiber having a mean length of 10 to 20 µm, and a diameter of 0.2 to 0.5 µm, was introduced as a powdered material through the supply port 1 of the unit A, and pressurized air at a pressure of 5 kg/cm² was introduced through the pressurized gas supply pipe 5.

On the other hand, ethyl alcohol with 5% silane was supplied through the liquid supply pipe 11 of the unit B, pressurized air at the same pressure as mentioned above was supplied through the pressurized gas supply pipe 10, and the atomized liquid silane coating material was blown through the coanda slit 7. The liquid coating material was supplied, by use of a micropump, at a rate in the range between 10 and 100 cc/min.

Furthermore, the solid/gas ratio was set at approximately 1.

In the course of passing through the unit B, the alcohol was dried and eliminated to obtain potassium titanate fibers coated with silane. The potassium titanate is hydrophilic, and is not usually dispersed in methyl methacrylate (solvent) or the like. However, the material treated with silane as mentioned above was completely dispersed. There was no coagulation or breakage of the poassium titanate, and no adhesion of fibers or the silane-coated material to the inner walls of the units A and B was observed.

### EXAMPLE 2

Using the device as shown in Fig.2, surface coating was carried out in the same manner as in EXAMPLE 1. It was possible to apply a coating of silane evenly and at high efficiency.

### EXAMPLE 3

Using silica particles (particle size : 1 to 100 µm), surface coating was performed in the same manner as in EXAMPLE 1. Even and good coating was achieved.

As a comparison, using the materials and apparatus of EXAMPLE 1,an attempt was made to apply surface coating only with the unit B, but there was coagulation of the short fibers and a good result could not be attained.

As another comparison, using both of the units A and B, an attempt was made to supply only a liquid coating material from the coanda slit 7 of the unit B, but a back flow of air occurred, thereby making it difficult to apply such a coating.

It goes without saying that the present invention is not limited to the foregoing embodiments and examples. Various modifications are possible depending on the type, size and shape of a powdered material, the type and supplied amount of a coating material, and the type of pressurized gas and its pressure.

## Claims

1. A method of coating surfaces of a powdered material, in which surfaces of a powdered material are coated by blowing a liquid coating material atomized by diffused gas through a coanda slit of a coanda spiral flow generating portion into the powdered material, which material is conveyed by a coanda flow or a coanda spiral flow.

2. A method as claimed in claim 1, wherein the powdered material is in particle, pellet or short fiber form.

3. Apparatus for coating surfaces of a powdered material, which comprises a powdered material introducing portion in which the powdered material is caused to undergo a coanda flow or a coanda spiral flow, and a coanda spiral flow generating portion for introducing a liquid coating material atomized by diffused gas.

4. Apparatus as claimed in claim 3, comprising a combination of : a coanda spiral flow or coanda flow unit having a supply port, a discharge outlet, an annular coanda slit for introducing pressurized gas in the lateral direction, a curved inclined surface or curved surface in the vicinity of said coanda slit, a pressurized gas supply pipe and a distribution portion; and a coanda spiral flow unit having an annular coanda slit, a curved inclined surface in the vicinity of said coanda slit, a distribution portion, a pressurized gas supply pipe, a liquid coating material supply pipe and a discharge outlet.

## Patentansprüche

1. Verfahren zum Überziehen von Oberflächen eines Pulvermaterials, bei dem Oberflächen eines Pulvermaterials dadurch überzogen werden, daß ein durch diffus eingebrachtes Gas zerstäubtes flüssiges Überzugmaterial durch einen Coandaschlitz eines Coandaspiralfluß-erzeugenden Abschnitts in das Pulvermaterial geblasen wird, welches Material durch einen Coandafluß oder einen Coandaspiralfluß gefördert wird.

2. Verfahren nach Anspruch 1, in dem das Pulvermaterial in der Form vor Partikeln, Pellets oder kurzen Fasern vorliegt.

3. Vorrichtung zum Überziehen von Oberflächen eines Pulvermaterials, umfassend: einen Einführabschnitt für Pulvermaterial, in dem das Pulvermaterial einem Coandafluß oder einem Coandaspiralfluß unterworfen wird, und einen Coandaspiralflußerzeugungsabschnitt zum Einführen eines durch diffus eingebrachtes Gas zerstäubten flüssigen Überzugmaterials.

4. Vorrichtung nach Anspruch 3, umfassend eine Kombination von: einer Coandaspiralfluß- oder Coandaflußeinheit mit einer Zufuhröffnung, einer Auslaßöffnung, einem ringförmigen Coandaschlitz zum Einführen von Druckgas in Querrichtung, einer gekrümmten schrägen Fläche oder gekrümmten Fläche nahe dem Coandaschlitz, einer Druckgaszufuhrleitung und einem Verteilerabschnitt; und einer Coandaspiralflußeinheit mit einem ringförmigen Coandaschlitz, einer gekrümmten schrägen Fläche nahe dem Coandaschlitz, einem Verteilerabschnitt, einem Druckgaszufuhrrohr, einem Zufuhrrohr für flüssiges Überzugsmaterial und einer Auslaßöffnung.

## Revendications

1. Procédé de revêtement de surfaces d'une matière en poudre, dans lequel des surfaces d'une matière en poudre sont revêtues par soufflage d'un matériau liquide de revêtement atomisé par un gaz diffusé par une fente à effet Coanda d'une partie génératrice d'un écoulement spiralé à effet Coanda dans la matière en poudre, cette matière étant transportée par un écoulement à effet Coanda ou un écoulement spiralé à effet Coanda.

2. Procédé selon la revendication 1, dans lequel la matière en poudre est sous forme de particules, de granulés ou de courtes fibres.

3. Appareil de revêtement de surfaces d'une matière en poudre, qui comprend une partie d'introduction d'une matière en poudre dans laquelle la matière en poudre est mise sous forme d'un écoulement à effet Coanda ou d'un écoulement spiralé à effet Coanda, et une partie génératrice d'un écoulement spiralé à effet Coanda destinée à introduire un matériau liquide de revêtement atomisé par un gaz diffusé.

4. Appareil selon la revendication 3, comprenant en combinaison un ensemble à écoulement à effet Coanda ou à écoulement spiralé à effet Coanda, ayant un orifice d'alimentation, une sortie d'évacuation, une fente annulaire à effet Coanda destinée à introduire un gaz comprimé en direction latérale, une surface courbe inclinée ou une surface courbe au voisinage de la fente à effet Coanda, un tube d'alimentation en gaz comprimé et une partie de distribution, et un ensemble à écoulement spiralé à effet Coanda ayant une fente annulaire à effet Coanda, une surface courbe inclinée placée au voisinage de la fente à effet Coanda, une partie de distribution, un tube d'alimentation en gaz comprimé, un tube d'alimentation en matériau liquide de revêtement et une sortie d'évacuation.
